# EUROPEAN PATENT SPECIFICATION

(11) **EP 4 177 695 B1**
(45) Date of publication and mention of the grant of the patent: **29.01.2025**
(21) Application number: 21833402.7
(22) Date of filing: 21.06.2021
(51) Int. Cl.: G05D 1/00, G01C 21/20

(54) **ROUTE PLANNING SYSTEM, MOBILE ROBOT, ROUTE PLANNING PROGRAM, AND MOBILE ROBOT CONTROL PROGRAM**
ROUTENPLANUNGSSYSTEM, MOBILER ROBOTER, ROUTENPLANUNGSPROGRAMM UND STEUERUNGSPROGRAMM FÜR MOBILEN ROBOTER
SYSTÈME DE PLANIFICATION D'ITINÉRAIRE, ROBOT MOBILE, PROGRAMME DE PLANIFICATION D'ITINÉRAIRE ET PROGRAMME DE COMMANDE DE ROBOT MOBILE

(30) Priority: 03.07.2020 JP 2020115465
(43) Date of publication of application: 10.05.2023
(73) Proprietor: OMRON Corporation, Kyoto 600-8530 (JP)
(72) Inventor: OKADA, Yasutaka, Kyoto-shi, Kyoto 600-8530 (JP); SASAKI, Jun, Kyoto-shi, Kyoto 600-8530 (JP); YAMADA, Ryota, Kyoto-shi, Kyoto 600-8530 (JP); KOGA, Tatsuya, Kyoto-shi, Kyoto 600-8530 (JP)
(74) Representative: Horn Kleimann Waitzhofer Schmid-Dreyer Patent- und Rechtsanwälte PartG mbB
(86) International application number: PCT/JP2021/023299
(87) International publication number: WO 2022/004444

(56) References cited:
- WO-A1-2019/089018
- JP-A- 2014 219 722
- JP-A- 2017 122 634
- JP-A- 2019 012 504
- US-A1- 2018 079 085
- US-A1- 2020 114 509
- GIFFORD K K ET AL: "Incorporating terrain uncertainties in autonomous vehicle path planning", INTELLIGENT ROBOTS AND SYSTEMS '96, IROS 96, PROCEEDINGS OF THE 1996 L EEE/RSJ INTERNATIONAL CONFERENCE ON OSAKA, JAPAN 4-8 NOV. 1996, NEW YORK, NY, USA,IEEE, US, vol. 3, 4 November 1996 (1996-11-04), pages 1134 - 1140, XP010212566, ISBN: 978-0-7803-3213-3, DOI: 10.1109/IROS.1996.568962

## Description

### TECHNICAL FIELD

The present invention relates to a route planning system, a mobile robot, a route planning program and a control program for a mobile robot.

### RELATED ART

Mobile robots that plan a route to a destination using map information and autonomously move to the destination have been put into practical use. Obstacles that may be re-arranged may be present in environments where mobile robots autonomously move. A technique is known for updating the map information, if an arrangement of obstacles detected while a mobile robot moves is different from the arrangement of obstacles listed in map information (see JP 2014 - 211775 A, for example).
US 2018/0079085 A1 discloses mapping method including: acquiring first map information created in advance, including information about a surrounding area of a mobile robot; acquiring second map information including information about the surrounding area by a sensor of the mobile robot; receiving third map information including information about the surrounding area from an environmental sensor node; (i) in the third map information, if a place exists in which an amount of change over time is equal to or greater than a certain threshold value, removing information about the place in each of the first and the second map information corresponding to that place, or alternatively, increasing the variance of information about the place in each of the first and the second map information corresponding to that place; and (ii) creating map information using the first and the second map information subjected to the removal or the variance increase.
US 2020/114509 A1 discloses a method for identifying a moving object in a three-dimensional space and a robot for implementing same. The robot includes a sensing module for calculating height and position information of an object by using two or more sensing units; a movement unit for moving the robot; a map storage unit for storing a three-dimensional map including the height and position information of the object, calculated by the sensing module, in a space in which the robot is moving; and a control unit for controlling the sensing module, the movement unit, and the map storage unit, converting the height and position information of the object calculated by the sensing module into global coordinates, storing, in the three-dimensional map, the height and position information of the object converted into the global coordinates, and removing, from the three-dimensional map, a moving object among objects stored in the map storage unit.
WO 2019/089018 A1 discloses an example robot that performs a scan to obtain image data of a given region. The robot performs image analysis on the image data to detect a set of undesirable objects, and generates a reference map that excludes the set of undesirable objects, where the reference map is associated with the location of the robot at the time of the scan.
Gifford, K. K. et al., "Incorporating terrain uncertainties in autonomous vehicle path planning", present at the 1996 IEEE/RSJ International Conference on Intelligent Robots and Systems - Robotic Intelligence Interacting with Dynamic Worlds (IIROS 96), discuss a probabilistic approach to obstacle location for autonomous vehicle path planning which uses empirical los functions to incorporate terrain map uncertainties into the path planning process.
Further state of the art is formed by JP 2019 - 12504 A, US 2019/0004520 A1 and CN 109213142 A; by JP 2017 - 122534 A; and by JP 2014 - 219 722 A and WO 2014/178273 A1.

### SUMMARY OF THE INVENTION

### PROBLEM TO BE SOLVED BY THE INVENTION

Some obstacles can be easily re-arranged while others cannot, depending on their characteristics. Even if there are obstacles of the same type, some of them can be easily moved while others cannot, depending on the place where they are arranged, the frequency of their usage, and the like. When planning a movement route to a destination, if a movement route in which all the obstacles indicated in a map are avoided is planned without consideration of such characteristics of the obstacles, the distance for which the mobile robot moves is inevitably long.

The present invention was made to solve such a problem, and provides a route planning system for planning a movement route of a mobile robot corresponding to an actual environment, a mobile robot that moves along the planned movement route, and the like.

### MEANS FOR SOLVING THE PROBLEMS

The present invention relates to a mobile robot and a control program as defined in the appended claims 1-3. An exemplary route planning system includes an obtaining unit configured to obtain an environmental map indicating, for any obstacle, a location and a degree of certainty that the obstacle is present at that location, a planning unit configured to plan a movement route along which a mobile robot moves, excluding any obstacles in the environmental map, that have a degree of certainty that does not satisfy a predetermined standard, and an output unit configured to output route information, which is information on the planned movement route, to the mobile robot.

The movement route is planned assuming that obstacles that are indicated in the environmental map but have a low certainty of being present at that location, are not present. If an obstacle is not present at its location, then this shortens the movement distance, and eventually, the movement time. The mobile robot moves while detecting obstacles, and thus even if there is an obstacle which was handled as being not present, the mobile robot can perform an avoidance operation.

The above-described route planning system may also include an update unit configured to update the degree of certainty indicated in the environmental map, based on detection information obtained from a detection sensor for detecting the obstacles. If a change in the situation can be reflected on the environmental map, not only the characteristics of the obstacle itself, but also characteristics of the obstacle due to the environment can be reflected on the degree of certainty.

Also, a configuration is also possible in which the update unit of the above-described route planning system obtains information regarding an obstacle that is not indicated in the environmental map from the detection information, the update unit generates tentative obstacle information, updates the tentative obstacle information based on the detection information that is further obtained, and if the tentative obstacle information satisfies a predetermined condition, adds a tentative obstacle in accordance with the tentative obstacle information to the environmental map as a confirmed obstacle. If the environmental map is appropriately updated, the route planning system can be stably used as a map used for route planning of the mobile robot while corresponding to the environment that dynamically changes.

Also, a configuration is also possible in which, the output unit of the above-described route planning system outputs, to the mobile robot, excluded object information, which is information regarding any obstacles that have been excluded by the planning unit in association with the route information. If the mobile robot can obtain such excluded object information, the mobile robot can recognize the possibility that an obstacle is present and perform an appropriate travel control.

A mobile robot according to a first aspect of the present invention is a mobile robot configured to obtain the route information and the excluded object information from the exemplary route planning system, including a movement control unit configured to move based on the route information, and a detection unit configured to detect any surrounding obstacles while the robot moves under the control of the movement control unit, wherein the detection unit executes detection processing that is finer than regular detection processing, on any obstacle included in the excluded object information. By performing such detection processing, the mobile robot can achieve both shortening of the movement route and safety in movement.

Also, the above-described mobile robot may also include a transmission unit configured to transmit, to the route planning system, a result of detection by the detection unit as detection information. If the route planning system can update the degree of certainty using the detection information transmitted from the mobile robot as well, the environmental map on which the actual situation is further reflected can be constructed.

An exemplary route planning program causes a computer to execute an obtaining step for obtaining an environmental map indicating, for any obstacle, a location and a degree of certainty that the obstacle is present at that location, a planning step for planning a movement route along which a mobile robot moves, excluding any obstacles in the environmental map that have a degree of certainty that does not satisfy a predetermined standard, and an outputting step for outputting route information that is information on the planned movement route, to the mobile robot. If the obstacle in the environmental map which was assumed to be not present is actually not present at that location, it shortens the distance, and eventually the time, in which the mobile robot moves.

A control program of the mobile robot according to a second aspect of the present invention is a control program for a mobile robot that obtains the route information that is output via the above-described route planning program and moves, the program causing a computer to execute a moving step for moving the mobile robot according to the route information, a detection step for detecting any surrounding obstacles while the mobile robot moves in the moving step, wherein, in the detection step, detection processing that is finer than regular detection processing is executed on the obstacle that is excluded in the planning step. By performing such detection processing, the mobile robot can achieve both shortening of the movement route and safety in movement.

### EFFECTS OF THE INVENTION

With the present invention, it is possible to provide a route planning system for planning a movement route of a mobile robot according to the actual condition of an environment, a mobile robot that moves along the planned movement route, and the like.

### BRIEF DESCRIPTION OF THE DRAWINGS

- FIG. 1: is a conceptual diagram showing how a route planning system and a mobile robot according to an embodiment are used.
- FIG. 2: is a perspective diagram showing an outer appearance of the mobile robot.
- FIG. 3: is a hardware configuration diagram of a system server.
- FIG. 4: is a hardware configuration diagram of the mobile robot.
- FIG. 5: is a conceptual diagram showing how a table which is easily movable is present on a movement route.
- FIG. 6: is a map visually showing an environment where the mobile robot moves autonomously.
- FIG. 7: is a conceptual diagram showing a data structure of the environmental map.
- FIG. 8: is a map showing a planned movement route.
- FIG. 9: is a conceptual diagram showing a data structure of route information.
- FIG. 10: is a flowchart illustrating processing in which the system server plans a movement route and transfers the movement route to the mobile robot.
- FIG. 11: is a flowchart illustrating processing in which the mobile robot moves from a starting point to a destination point.
- FIG. 12: is a flowchart illustrating processing in which the system server updates a degree of certainty in the environmental map.
- FIG. 13: is a diagram showing a map of a plant where the mobile robot moves autonomously and the movement route of the mobile robot.
- FIG. 14: is a flowchart illustrating processing performed on a tentative obstacle.

### EMBODIMENTS OF THE INVENTION

Hereinafter, the present invention will be described through embodiments of the invention, but the claimed invention is not limited to the following embodiments. Moreover, not all the structures described in the embodiments are essential as means for solving the problems.

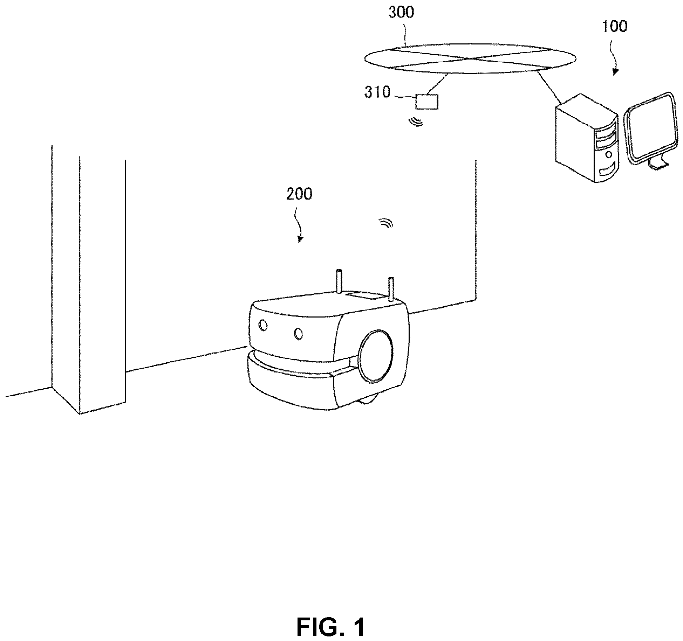

FIG. 1 is a conceptual diagram showing how a system server 100 that functions as an exemplary route planning system and a mobile robot 200 according to the present embodiment that moves autonomously along a movement route planned by the system server 100 are used. The mobile robot 200 conveys an object to be transferred that is housed therein to a destination, for example. In the present embodiment, the environment where the mobile robot 200 moves is assumed to be an environment where people are also present, rather than an environment prepared for a robot. In an environment where people are also present, various structures and installed objects that may be obstacles for autonomous movement of the mobile robot are carried and moved around. The mobile robot 200 moves autonomously toward a set destination in such an environment.

The mobile robot 200 is connected to a network 300 via a communication unit 310 installed in the environment. The system server 100 is also connected to the network 300. The system server 100 is a server that performs management of the mobile robot 200, and as part of management, plans a movement route on which the mobile robot 200 moves autonomously, and outputs the movement route to the mobile robot 200. The system server 100 can manage not only a single mobile robot 200, but also a plurality of mobile robots 200 in parallel. In that case, the system server 100 can also plan respective movement routes for the mobile robots 200. Further, a server for managing the mobile robots 200 may be separate from a server for planning the movement routes. In that case, the server for planning the movement routes may output the planned movement routes to the mobile robots 200 via the server for managing the mobile robots 200.

In this embodiment, the system server 100 obtains an environmental map indicating, for any obstacle, the location of the obstacle and a degree of certainty representing how certain it is that the obstacle is present at that location, and plans the movement route by excluding any obstacles with a degree of certainty that does not satisfy a predetermined standard. Note that a starting point and a destination point of the movement route may be generated automatically by the system server 100 in accordance with the task to be performed by the mobile robot 200, or may be designated by a user.

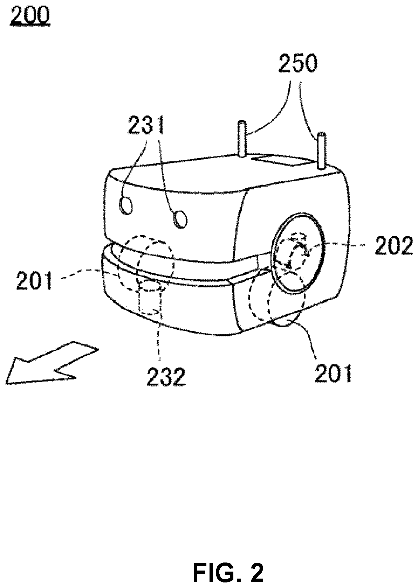

FIG. 2 is a perspective view showing an outer appearance of the mobile robot 200. The mobile robot 200 includes a trolley portion where movement functions are aggregated, and two driving wheels 201 and one caster 202 that come in contact with the ground. The two driving wheels 201 are arranged such that the rotational shafts thereof match. The driving wheels 201 are rotationally driven independently by a motor (not shown). The caster 202 is a driven wheel, and follows such that the caster 202 follows the direction in which the mobile robot 200 moves.

The mobile robot 200 includes a stereo camera 231 at an upper portion of a front surface thereof. The stereo camera 231 has a configuration in which two camera units having the same field angle are arranged spaced apart from each other, and output imaging signals captured by the respective camera units. The mobile robot 200 can grasp the distance and direction with respect to the surrounding obstacles, what the obstacle are, and so on, by analyzing the imaging signals captured by the stereo camera 231.

The mobile robot 200 includes a laser scanner 232 at a lower portion of its front surface. The laser scanner 232 scans a certain range within a horizontal plane at every step angle, and outputs for every direction whether there is an obstacle. If there is an obstacle, the laser scanner 232 outputs the distance to that obstacle. The mobile robot 200 can grasp whether the obstacle is moving, and if it is moving, the direction in which and the speed at which the obstacle is moving, by analyzing sequential outputs from the laser scanner 232. A communication unit 250 exchanges information with the communication unit 310 installed in the environment via wireless communication.

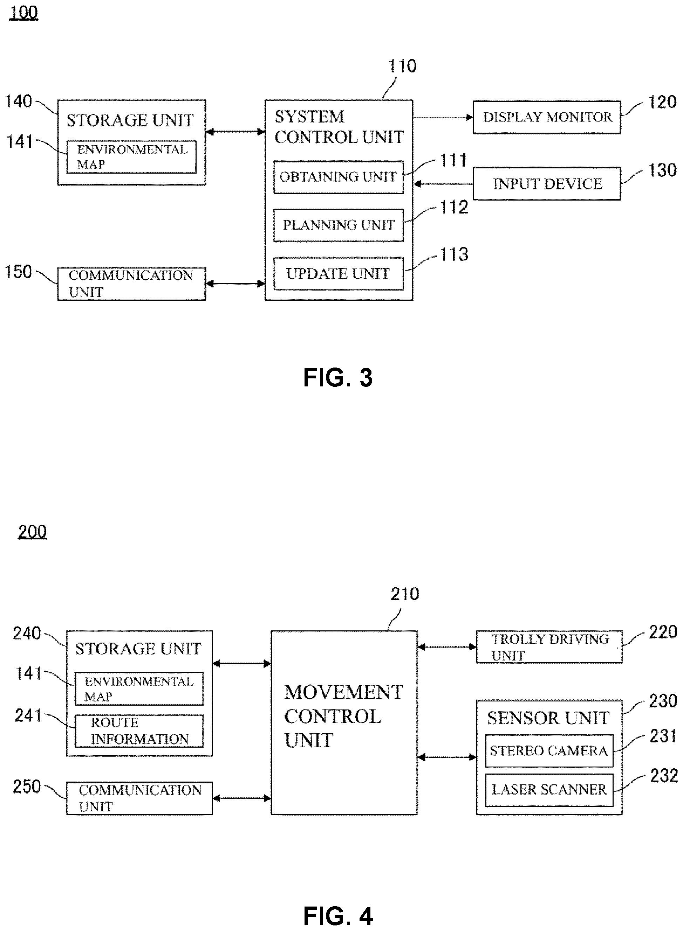

FIG. 3 is a hardware configuration diagram of the system server 100. The system server 100 is mainly constituted by a system control unit 110, a storage unit 140, and a communication unit 150. In this embodiment, the system server 100 also includes a display monitor 120 and an input device 130 such that the user can directly perform an operation such as an input of information or program updates of the system server 100.

The system control unit 110 is a processor (CPU: Central Processing Unit) that performs control of the system server 100 and execution processing of the program. The processor may cooperate with a calculation processing chip such as an ASIC (Application Specific Integrated Circuit) or a GPU (Graphics Processing Unit). The system control unit 110 reads out the route planning program stored in the storage unit 140 and performs various types of processing relating to planning of the movement route. The display monitor 120 is a monitor including a liquid crystal panel, for example, and displays the arrangement of the obstacles described in the environmental map, the degrees of certainty associated with the respective obstacles, and the like in a visible manner. The input device 130 is, for example, a keyboard or a mouse, and used by the user to generate environmental map information and set the destination of the mobile robot 200.

The storage unit 140 is a non-volatile storage medium, and constituted by an HDD (Hard Disk Drive), for example. In addition to programs that execute control and processing of the system server 100, the storage unit 140 stores various parameter values, functions, learned models, lookup tables, and the like used for control and calculation. The storage unit 140 stores, in particular, an environmental map 141. The environmental map 141 will be described later in detail. The storage unit 140 does not need to be constituted by a single hardware, and for example, a storage medium for storing a program and a storage medium for accumulating the environmental map 141 may also be constituted by separate hardware.

The communication unit 150 performs connection to the network 300 and exchanges data with the mobile robot 200, and is constituted by a LAN unit, for example. The communication unit 150 functions as input/output unit for inputting/ outputting various information and instructions in cooperation with the system control unit 110. When route information that is the planned information regarding the movement route is output to the mobile robot 200, the communication unit 150 functions as an output unit.

The system control unit 110 also serves as a function calculation unit that executes various calculations in accordance with processing instructed by the route planning program. The system control unit 110 may function as an obtaining unit 111, a planning unit 112, and an update unit 113. The specific calculation processing performed by the functional calculation unit will be described later.

FIG. 4 is a hardware configuration diagram of the mobile robot 200. The mobile robot 200 is mainly constituted by a movement control unit 210, a trolley driving unit 220, a sensor unit 230, a storage unit 240, and a communication unit 250.

The movement control unit 210 is a processor (CPU) that performs control of the mobile robot 200 and execution processing of the program. The processor may also cooperate with a calculation processing chip such as an ASIC or a GPU. The movement control unit 210 executes various processing relating to autonomous movement by reading out a control program stored in the storage unit 240.

The trolley driving unit 220 includes driving wheels 201 and a driving circuit and a motor for driving the driving wheels 201. The movement control unit 210 executes rotational control of the driving wheels 201 by sending a driving signal to the trolley driving unit 220. Also, the movement control unit 210 receives feedback signals such as an encoder signal from the trolley driving unit 220, and grasps the direction and speed of the movement of the mobile robot 200.

The sensor unit 230 includes various kinds of sensors for detecting the surrounding people and obstacles. The stereo camera 231 and the laser scanner 232 are constituent elements of the sensor unit 230. The stereo camera 231 captures the images of the surrounding environment in response to requests from the movement control unit 210, and sends the imaging signals to the movement control unit 210. The movement control unit 210 executes analysis processing for recognizing the obstacles using the imaging signals. For example, the movement control 210 identifies the obstacles using the learned model, and detects the position and orientation of the obstacles using the disparity of the stereo images.

In response to the request from the movement control unit 2, the laser scanner 232 detects whether there is an obstacle in the direction in which the mobile robot 200 moves, and sends the detection signal, which is a result of the detection, to the movement control unit 210. The sensor unit 230 may include another sensor for detecting the surrounding obstacles while moving, in addition to or instead of the stereo camera 231 and the laser scanner 232. The sensor unit 230 functions as a detection unit for detecting the surrounding obstacles. The sensor unit 230 may also include other sensors, such as a sensor for monitoring the state of the mobile robot 200, in addition to the sensors for detecting the surrounding obstacles.

The storage unit 240 is a non-volatile storage medium and constituted by a solid-state drive, for example. The storage unit 240 stores various parameter values, functions, learned models, lookup tables, and the like used for control and calculation, in addition to programs that execute control and processing of the mobile robot 200. The storage unit 240 stores, in particular, the environmental map 141 of the environment where the mobile robot 200 moves autonomously, and route information 241 received from the system server 100. The route information will be described later in detail. Note that the storage unit 240 does not need to be constituted by a single piece of hardware, and, for example, a storage medium for storing a program and a storage medium for storing the environmental map 141 and the route information 241 may also be constituted by separate pieces of hardware.

The communication unit 250 is a wireless LAN unit, for example. The movement control unit 210 exchanges various types of information with the system server 100 connected to the network 300 via the communication unit 250. The communication unit 250 has a function as a transmission unit for cooperating with the movement control unit 210 to transmit, to the system server 100, the detection result detected by the sensor unit 230 as the detection information.

When the mobile robot moves autonomously in an environment where people are also present, various structures and installed objects may hinder the autonomous movement. Among them, some are easy to re-arrange, while others are not. Even if they are the same kind of obstacles, some are easy to move, while others are not, depending on the places where they are arranged, the frequency of use, and the like.

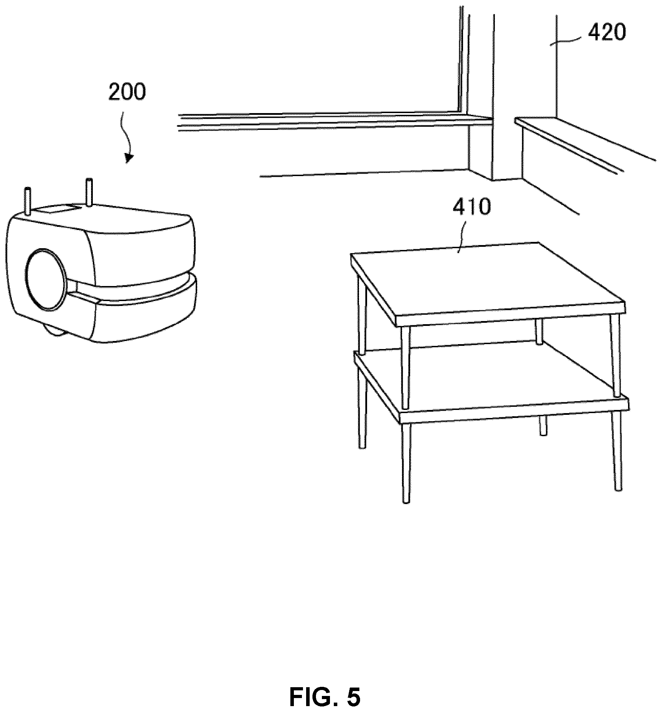

FIG. 5 is a conceptual diagram showing how a table 410 that is easily movable is present on the movement route. A column 420, which is a structure of a building, is an obstacle for the mobile robot 200, but it is hardly conceivable that the arrangement of the column 420 is changed. On the other hand, it is conceivable that the table 410 tends not to be moved when the table 410 is placed in the corner of the room, or a heavy object is placed on the table 410. However, when the table 410 is present near the path of a person with nothing placed thereon, the table 410 can be easily moved. In other words, it can be said that the certainty that the obstacle is actually present at the described position in the environmental map depends on its characteristics, state, frequency of use, and the like, which are unique to each obstacle.

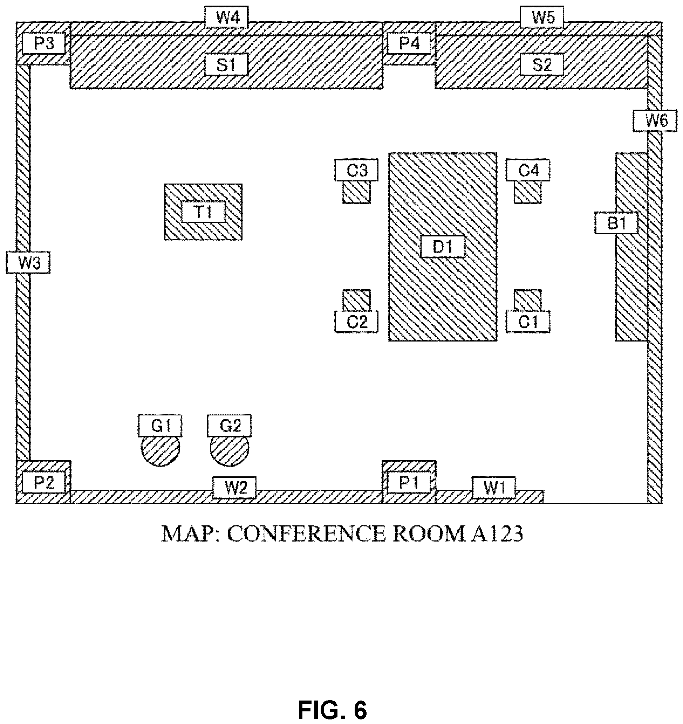

FIG. 6 is a map visually showing an environment where the mobile robot 200 moves autonomously, and an example of the obstacles indicated in the environmental map in a plan view. The illustrated example shows an A123 conference room where the mobile robot 200 can autonomously move.

The environmental map indicates, as structures and installed objects that may be obstacles against autonomous movement of the mobile robot 200, columns P1 to P4, walls W1 to W6, shelves S1 and S2, a board B1, a conference desk D1, chairs C1 to C4, a table T1, and plants G1 and G2. The environmental map also shows the regions of the conference room that are respectively occupied by the structures and installed objects.

The wall W1 is adjacent to an entrance of the conference room A123. The walls W3 and W6 are removable partitions between conference room A123 and the adjacent conference room. The shelves S1 and S2 are large shelves, and fixed at the positions farthest away from the entrance. The conference desk D1 is large, and a power supply cable is routed thereon. The table T1 is small like the table 410 shown in FIG. 5, and used as a table to place luggage of attendees of the conference. A relatively large space surrounds the table T1. The chairs C1 to C4 are small and have casters. The plants G1 and G2 are foliage plants and arranged near the wall W2. As described above, the obstacles have their own characteristics as well as characteristics due to the location where they are located.

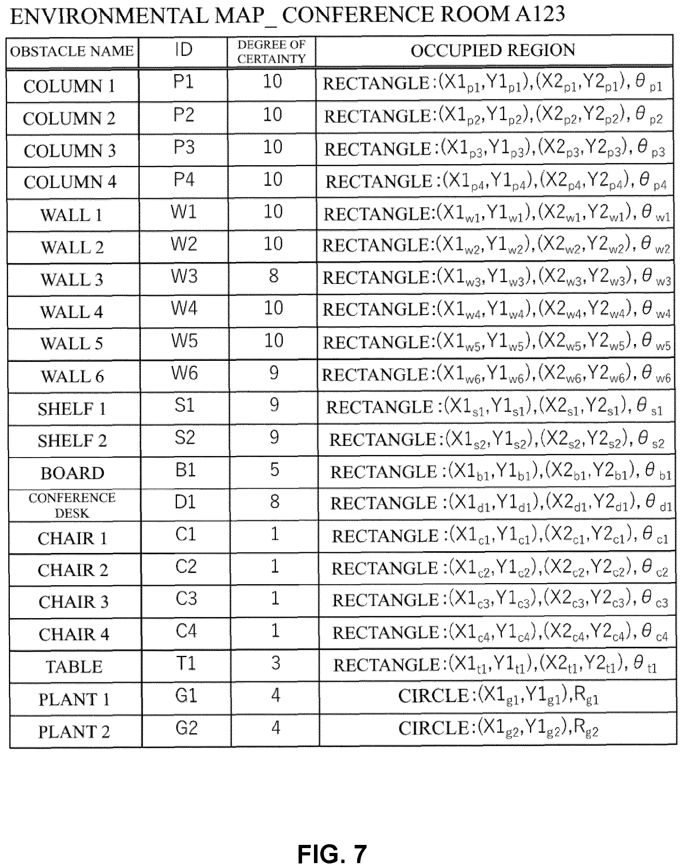

The environmental map 141 that is used by the system server 100 and the mobile robot 200 has a data structure in which the obstacles are described as data. FIG. 7 is a conceptual diagram showing the data structure of the environmental map listing the structures and installed objects shown in FIG. 6.

The environmental map is generated for each space divided in accordance with the purpose of use, such as conference room, warehouse, passage, or hall. In the depicted example, for each obstacle that is present in the conference room A123, "obstacle name", "ID", "degree of certainty", and "occupied region" are listed together with a tag of the conference room A123.

"Obstacle name" is the name of the obstacle, and "ID" is a unique symbol for identifying individual obstacles. "Occupied region" represents the region of the mapped space that is occupied by the obstacle, using the projected shape of the obstacle on the floor and the coordinates in the floor. As an example, the region occupied by the table T1 expresses that the projected shape is a "rectangle", the coordinates of the left-top corner are (X1ₜ₁, Y1ₜ₁), the coordinates of the right-bottom corner are (X2ₜ₁, Y2ₜ₁), and the rotational angle of the diagonal is θₜ₁. Also, the region occupied by the plant G1 expresses that the projected shape is a "circle", the central coordinates are (X1_{g1}, Y1_{g1}), and the radius is R_{g1}.

"Degree of certainty" represents how certain it is that the obstacle is actually present at that location given as the occupied region. Here, one of integers from 1 to 10 is assigned, with 10 being most certain and 1 being least certain. The degree of certainty of the wall W4 is 10, and it can be said that the wall W4 is present at the location indicated by the occupied region without fail, for example. On the other hand, the wall W3 is a partition and thus it is assigned a degree of certainty of 8, indicating that the certainty of being present at the location indicated by the occupied region is slightly lower than that of the wall W4. The table T1 is assigned a degree of certainty of 3, indicating that the certainty of being present at that location indicated by the occupied region is significantly low.

When the environmental map is generated, the degree of certainty is assigned by the generator in consideration of the characteristics of the obstacles. Alternatively, the map generation program may automatically assign the degree of certainty in consideration of the name, occupied region, and the relative position to other obstacles, of the obstacle.

In the present embodiment, the update unit 113 of the system server 100 updates the certainty as needed while the generated environmental map is used. Specifically, in the mapped space where the environmental map is generated, a detection sensor for detecting the state of the obstacle is installed. The update portion 113 increases/decreases the certainty of the obstacle of interest using the detection information from the detecting sensor as above. Also, the update unit 113 obtains the detection result obtained by the mobile robot 200 and another mobile robot that are given the route information 241 during autonomous movement, as the detection information, and increases/decreases the degree of certainty of the obstacle of interest.

If the obstacle to be observed satisfies an evaluation condition for increasing the degree of certainty, the update unit 113 increases the degree of certainty by 1, and if the obstacle to be observed satisfies an evaluation condition for decreasing the degree of certainty, the update unit 113 decreases the degree of certainty by 1. However, as described above, the maximum value of the degree of certainty is 10 and the minimum value is 1. The evaluation condition for increasing the certainty is, for example, the case in which the state where the obstacle does not move is continuously detected over a predetermined time. By contrast, the evaluation condition for decreasing the certainty is, for example, the case where it is detected that the obstacle moves for a predetermined number of times within a predetermined time period. The predetermined time period and the predetermined number of times may be respectively set in accordance with the characteristics of the obstacles. When the obstacle of interest is a wall, for example, the degree of certainty may be set such that it does not significantly decrease, while when the obstacle of interest is a chair, the degree of certainty may be set such that it will be decreased as soon as possible. Also, a weight may be added in accordance with the type of the detection sensor. For example, if the obstacle can be identified from the imaging signal captured by the stereo camera 231, it is preferable that the detection information originated from the stereo camera 231 is heavily weighed.

In this embodiment, the planning unit 112 plans the movement route with reference to the degree of certainty in the environmental map. Specifically, the route is planned on the assumption that the obstacles with a degree of certainty of 3 or less are excluded as being not present at the locations described on the environment map in actuality although they are described in the environmental map. In other words, the standard for deciding whether an obstacle is excluded is set in advance such that the obstacle is excluded if the degree of certainty is 3 or less, and not excluded if the degree of certainty is 4 or more.

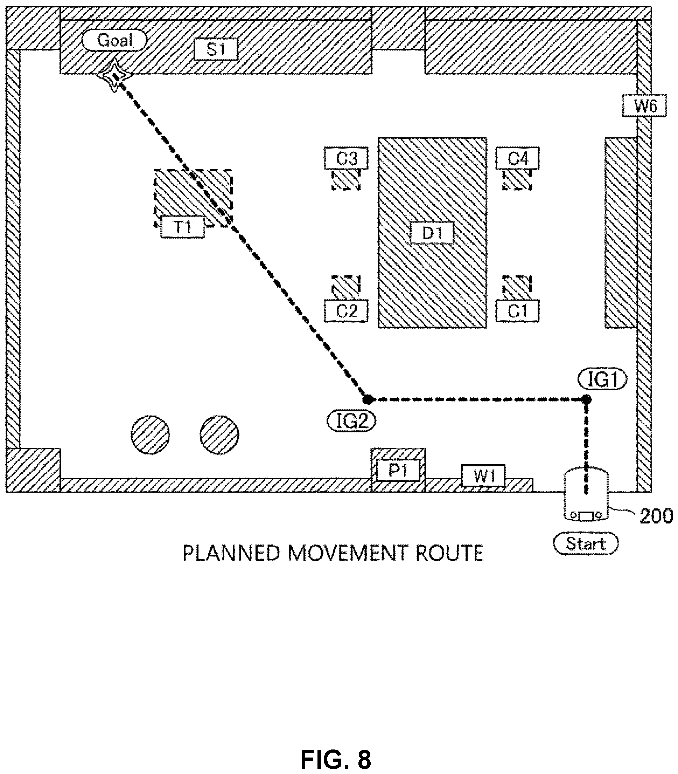

FIG. 8 is a map showing the movement route planned by the planning unit 112 in the environment shown in FIG. 6. The starting point of the mobile robot 200 is set to the entrance of the conference room, and the destination point is set to a position at the shelf S1.

When the starting point and the destination point are set, the obtaining unit 111 obtains the environmental map 141 including these points from the storage unit 140. If the environmental map 141 is not present in the storage unit 140, the obtaining unit 111 obtains the environmental map 141 from an environmental map database connected to the network 300 via the communication unit 150.

The planning unit 112 refers the environmental map 141 obtained by the obtaining unit 111, and plans the movement route from the starting point to the destination point using a known algorithm, after excluding the table T1 and the chairs C 1 to C4, which have degrees of certainty of 3 or less. A known algorithm is, for example, an algorithm for selecting the movement route which has the minimum accumulated cost, the accumulated cost being accumulation of the costs respectively set for the total movement distance, the rotation angle, and the distance between the obstacle and the route, of the mobile robot 200.

The thus planned movement route is a route along which the mobile robot 200 arrives at the destination point by turning at two turning points IG1 and IG2, as shown in the drawing. Since the table T1 has been excluded, the linear route from IG2 to the destination point crosses the region occupied by the table T1 described in the environmental map 141.

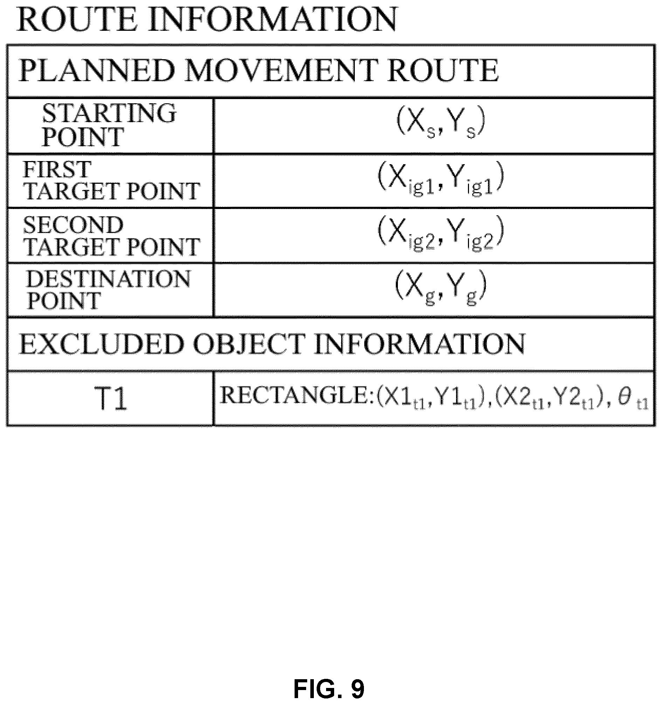

FIG. 9 is a conceptual diagram showing the data structure of the route information 241 that is information regarding the planned movement route. The route information 241 is generated by the planning unit 112, and then output to the mobile robot 200 via the communication unit 150.

The route information 241 includes a "planned movement" route and "excluded object information". "Planned movement route" represents a movement route that is planned, and in which the starting point, the destination point, and an intermediate target point set between the starting point and the destination point are described as coordinate values. "Intermediate target point" is a turning point at which the mobile robot 200 turns. Upon arriving at a first target point (X_{ig1}, Y_{ig1}), the mobile robot 200 turns toward a second target point (X_{ig2}, Y_{ig2}), and moves straight ahead toward the second target point.

The excluded object information is information regarding any obstacles that were excluded by the planning unit 112 when planning the movement route. Here, since the table T1 was excluded, information regarding the ID and the region occupied by the table T1 is listed. In this manner, if the excluded object information is associated with the route information 241, the mobile robot 200 can execute detection processing that is finer than the regular detection processing with reference to excluded object information to confirm if the obstacle is actually present. The finer detection processing is realized by, for example, sensing at a lower speed. In the case of the stereo camera 231, it is realized by raising the obtaining rate of the imaging signal to be obtained, and in the case of the laser scanner 232, it is realized by reducing the step angle for detection.

By planning the movement route as described above, if an excluded obstacle is not actually present at that location, it shortens the movement distance, and eventually, the movement time. Since the mobile robot moves while detecting the obstacles, even if an obstacle that was treated as not present is actually present, the mobile robot can execute an avoidance operation. If detection processing that is finer than the regular detection processing is executed on the region occupied by the excluded obstacle, both shortening of movement route and ensuring safety in movement can be achieved at a higher level.

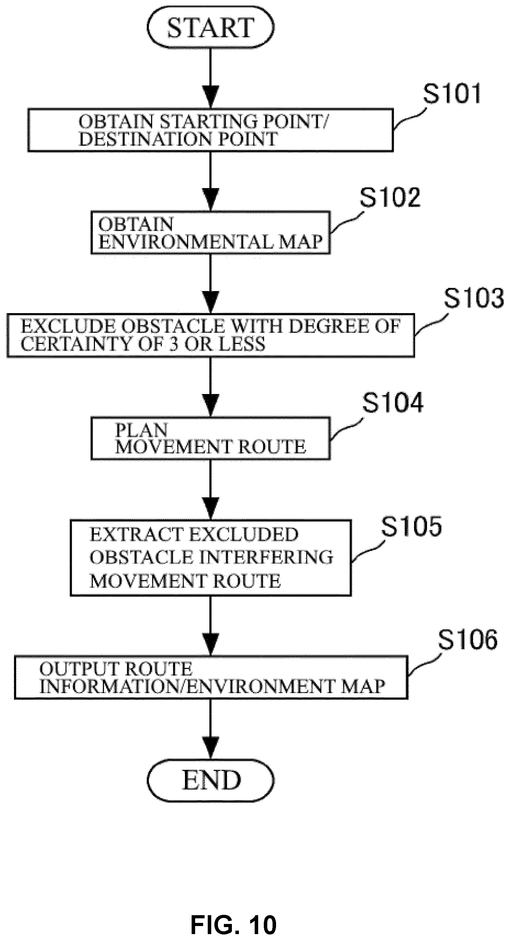

Next, a procedure regarding planning of a movement route will be described using a flowchart. FIG. 10 is a flowchart for illustrating processing in which the system server 100 plans the movement route and transfers the route to the mobile robot 200. The flowchart starts at a timing before the mobile robot 200 starts to move or a timing before the mobile robot 200 executes a task, for example.

In step S101, the obtaining unit 111 obtains information regarding the starting point and the destination point. Specifically, the obtaining unit 111 may obtain the information input by a user via an input device 130. If a task has already been set, the obtaining unit 111 may obtain the information from the information detailing the task. The obtaining unit 111 advances to step S102, and obtains the environmental map 141. Specifically, the obtaining unit 111 selects and obtains the environmental map 141 including the obtained starting point and the destination point out of a group of environmental maps stored in the storage unit 140, for example.

In step S103, the planning unit 112 receives the environmental map obtained by the obtaining unit 111, and extracts and excludes the obstacles having the degrees of certainty that are set to 3 or less. Then, the planning unit 112 advances to step S104, and plans the movement route from the starting point to the destination point such that the remaining obstacles are avoided.

In step S105, the planning unit 112 checks if there are any interferences between the planned movement route and the excluded obstacles. Specifically, the planning unit 112 determines whether the planned movement route passes through any occupied regions occupied by the excluded obstacles. Then, if it is determined that the movement route will pass through the region occupied by an obstacle, the obstacle is extracted and added to the excluded object information.

In step S106, the planning unit 112 generates the route information 241 in which the planned movement route is associated with the excluded object information. The system control unit 110 cooperates with the communication unit 150 to output the corresponding route information 241 to the mobile robot 200. If the mobile robot 200 does not have the environmental map 141, the planning unit 112 also outputs the environmental map 141 to the mobile robot 200, and ends the procedure. Note that the output of the route information 241 to the mobile robot 200 does not need to be performed immediately after generation, and may also be output upon request from the mobile robot 200. Also, the present invention is not limited to the case where the route information is directly output from the system server 100 to the mobile robot 200, and the route information may also be output via a control server that instructs the task to the mobile robot 200.

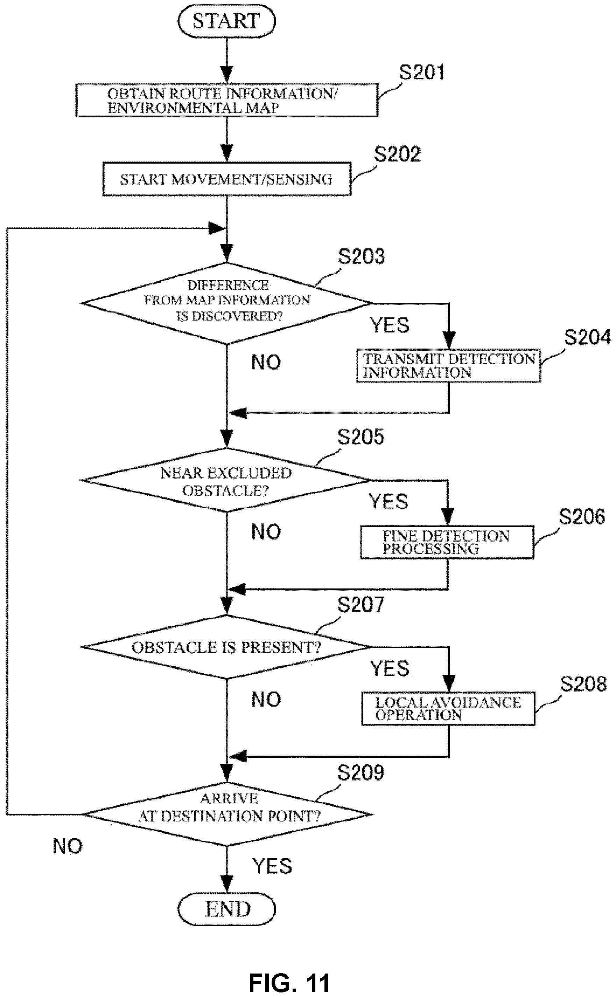

Next, the procedure regarding movement of the mobile robot 200 will be described using a flowchart. FIG. 11 is a flowchart illustrating processing in which the mobile robot 200 moves from the starting point to the destination point. The flowchart starts from the time when the mobile robot 200 arrives at the starting point, for example.

In step S201, the movement control unit 210 obtains the route information 241 and the environmental map 141 from the system server 100. If at least either of them is already stored in the storage unit 240, the movement control unit 210 reads it out from the storage unit 240. Next, in step S202, the movement control unit 210 starts movement. The movement control unit 210 controls the trolley driving unit 220 such that the trolley driving unit 220 moves along the planned movement route described in the path information 241. Also, the movement control unit 210 controls the sensor unit 230 to start detection of the surrounding obstacles.

In step S203, the movement control unit 210 compares the detection result obtained from the output of the sensor unit 230 with the respective occupied regions of the obstacles described in the environmental map 141, to determine whether there is a difference between the detection result and the occupied regions. If there is a difference, the movement control unit 210 advances to step S204, and transmits the detection result to the system server 100 as the detection information. The detection information may be associated with the ID of the obstacle for which the difference was found. When the transmission processing in step S204 ends, or if there is no difference in step S203, the movement control unit 210 advances to step S205.

In step S205, the movement control unit 210 determines whether the mobile robot 200 has arrived at a location near the region occupied by the obstacle that is listed as an excluded obstacle. If, for example, the mobile robot 200 has arrived at a range within a 2 m range from the end of the occupied region, the movement control unit 210 determines that the mobile robot 200 has arrived at the location near the occupied region, and advances to step S206. Upon advancing to step S206, the movement control unit 210 starts fine detection processing that is detection processing that is finer than the detection processing previously performed. Upon starting the fine detection processing in step S206, when it is determined that the mobile robot 200 has not arrived at the location near the region occupied by the obstacle in step S205, the movement control unit 210 advances to step S207.

In step S207, the movement control unit 210 analyzes the detection result obtained from the output of the sensor unit 230, and determines, for example, whether there is an obstacle within a 1 m range with respect to the direction in which the mobile robot 200 travels. If it is determined that there is an obstacle, the movement control unit 210 advances to step S208. Advancing to step S208, the movement control unit 210 executes a local avoidance operation for avoiding the corresponding obstacle. Specifically, the movement control unit 210 bypasses the obstacle, or if the obstacle is a moving body, escapes from the direction in which the obstacle travels. Upon completing the local avoidance operation, or if there is no obstacle in step S207, the movement control unit 210 advances to step S209.

In step S209, the movement control unit 210 determines whether the mobile robot 200 has arrived at the destination point. If it is determined that the mobile robot 200 has not arrived, the movement control unit 210 returns to step S203 and continues the procedure. If it is determined that the mobile robot 200 has arrived, the movement control unit 210 ends the procedure.

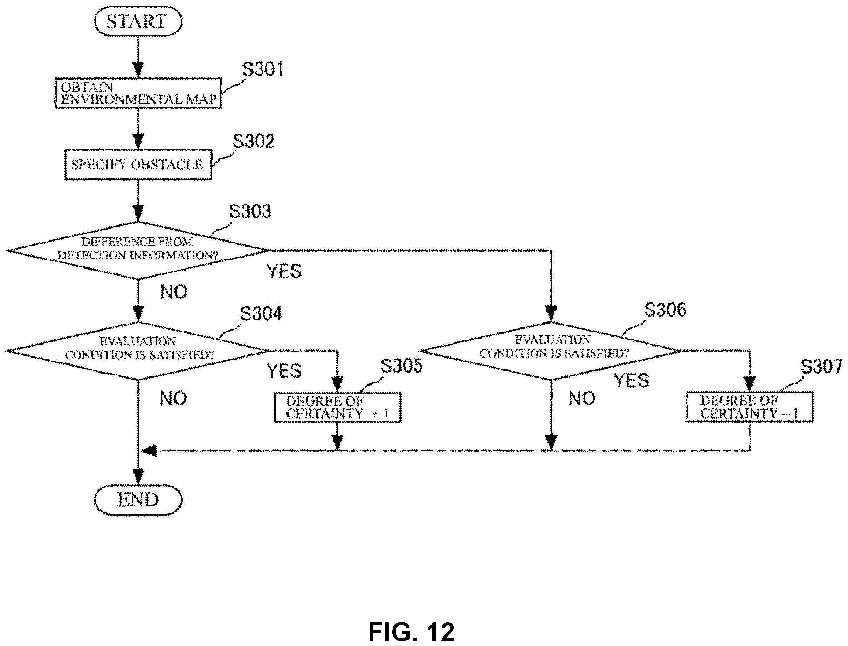

Next, the procedure for the update of the degree of certainty will be described using a flowchart. FIG. 12 is a flowchart illustrating processing performed by the update unit 113 of the system server 100 to update the degree of certainty in the environmental map. The flowchart starts from the time when the update unit 113 receives the detection information. The detection information may be transmitted not only from the mobile robot 200 as described above, but also from a detection sensor installed in the space covered by the environmental map.

Upon obtaining the detection information, in step S301, the update unit 113 selects and obtains the environmental map corresponding to the mapped space where the detection information is generated, out of the group of environmental maps stored in the storage unit 140. Next, in step S302, the update unit 113 checks whether the detection information includes the detection result of any obstacles (i.e. whether any obstacles are detected), and reads out the information regarding the obstacle from the obtained environmental map.

In step S303, the update unit 113 compares the detection result of the detection information with the obstacle information in the environmental map to determine whether there is a difference therebetween. If there is no difference, the update unit 113 advances to step S304, and if there is a difference, the update unit 113 advances to step S306.

Upon advancing to step S304, the update unit 113 determines whether the obstacle to be observed satisfies the evaluation condition for increasing the degree of certainty. If the obstacle satisfies the condition, the update unit 113 advances to step S305, and increases the degree of certainty of the obstacle by 1, and ends the procedure. If the obstacle does not satisfy the condition, the update unit 113 ends the procedure without updating the degree of certainty.

Upon advancing to step S306, the update unit 113 determines whether the obstacle to be observed satisfies the evaluation condition for decreasing the degree of certainty. If the obstacle satisfies the condition, the update unit 113 advances to step S307, and decreases the degree of certainty of the obstacle by 1, and ends the procedure. If the obstacle does not satisfy the condition, the update unit 113 ends the procedure without updating the degree of certainty.

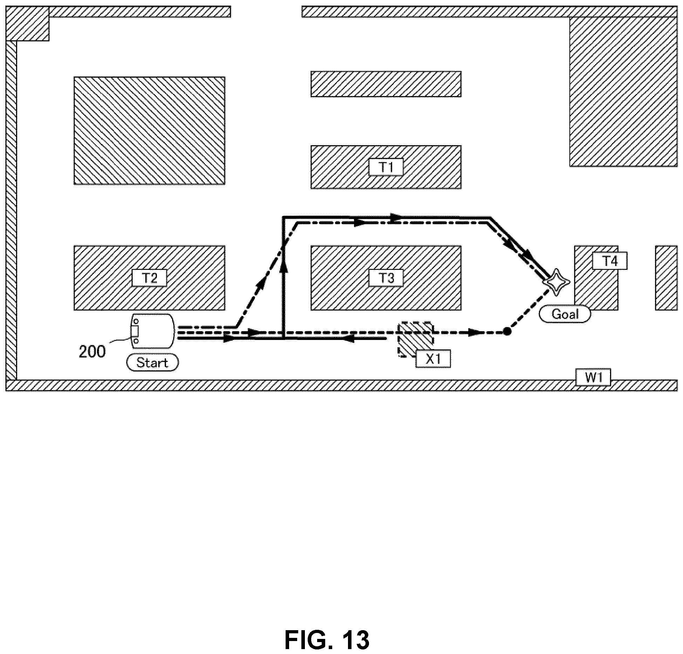

Although the above example described that the mobile robot 200 moves autonomously in the conference room, the mobile robot 200 may autonomously move in various environments. Accordingly, a case where the mobile robot 200 moves autonomously in a plant where a production facility is installed will be described. FIG. 13 is a diagram showing a map of a plant where the mobile robot 200 moves autonomously and the movement route of the mobile robot 200.

Installed in the plant are a working table T1 provided with a line for performing the primary processing on products, and working tables T2 and T3 respectively provided with lines for performing secondary processing, and a working table 4 where the products that were subjected to the secondary processing are checked. There are passages that are wide enough to allow the mobile robot 200 to pass through, between the working tables T1 and T3, T2 and T3, and T3 and T4. There are passages that are wide enough to allow the mobile robot 200 to pass through, between the working tables T2, T3, and T4, and the wall W1 opposite the working tables. The working tables T1 to T4 and the wall W1 are shown in the environmental map 141 depicting the plant, and all the degrees of certainty thereof are set to 4 or more.

Here, a conveying task is assumed for conveying a manufactured product that was subjected to the secondary processing at the working table T2 to the working table T4, where inspection is performed. Specifically, a point in the working table T2 that opposes the wall W1 is set to the starting point, and a point in the working table T4 that opposes the working table T3 is set to the destination point. When an operator working on the secondary processing line places the product on the mobile robot 200 and presses a movement start button, the mobile robot 200 autonomously moves to the destination point, and an inspector takes the product from the mobile robot 200 when it has stopped at the destination point, for example.

The planning unit 112 of the system server 100 refers to the environmental map 141 and plans the movement route indicated by the dotted line according to the above-described procedure. Incidentally, many things and people come and go through the plant, and cardboards, measurement devices, and the like may be placed on the passages, for example. Such cardboards and the like are not indicated in the environmental map 141, and may be rearranged in a short period of time, or left as they are for a long period of time. In any case, they may be obstacles that prevent autonomous movement of the mobile robot 200.

A measurement device X1 placed between the working table T3 and the wall W1 is such an obstacle. When the mobile robot 200 moves autonomously along the movement route planned by the planning unit 112, at the time when the mobile robot 200 arrives at a location near the measurement device X1, the measurement device X1 is detected by the sensor unit 230 as an obstacle. As a result, the mobile robot 200 performs the local prevention operation. In this case, since the mobile robot 200 cannot pass by the measurement device X1, the mobile robot 200 heads for the destination point along a detour route along the outer edge of the working table T3. In other words, the mobile robot 200 moves along the movement route indicated by the solid line and arrives at the destination point.

Although the measurement device X1 is not described in the environmental map 141, if it is repeatedly detected as an obstacle for a certain period, it is preferable that the measurement device X1 is given a degree of certainty of 4 or more, so that this obstacle is not excluded when planning the route, and is noted in the environmental map. If X1 is noted in the environmental map 141 as an obstacle having the degree of certainty of 4 or more, the planning unit 112 plans the movement route indicated by the dashed-dotted line. In other words, it is possible to plan a movement route that is shorter than the movement route indicated by the solid line.

However, in an environment where many things and people come and go through, it is not preferable to immediately add the detected obstacle to the environmental map 141 in terms of the characteristics of a map that is used to plan the movement route. Accordingly, if the update unit 113 receives detection information regarding obstacles that are not indicated in the environmental map 141 from the mobile robot 200 or the detection sensor installed in the space covered by the environmental map, the update unit 113 stores the obstacle as a tentative obstacle in the storage unit 120. Thereafter, when a predetermined condition is satisfied, the update unit 113 additionally writes the information regarding the obstacle onto the environmental map 141, and updates the environmental map 141.

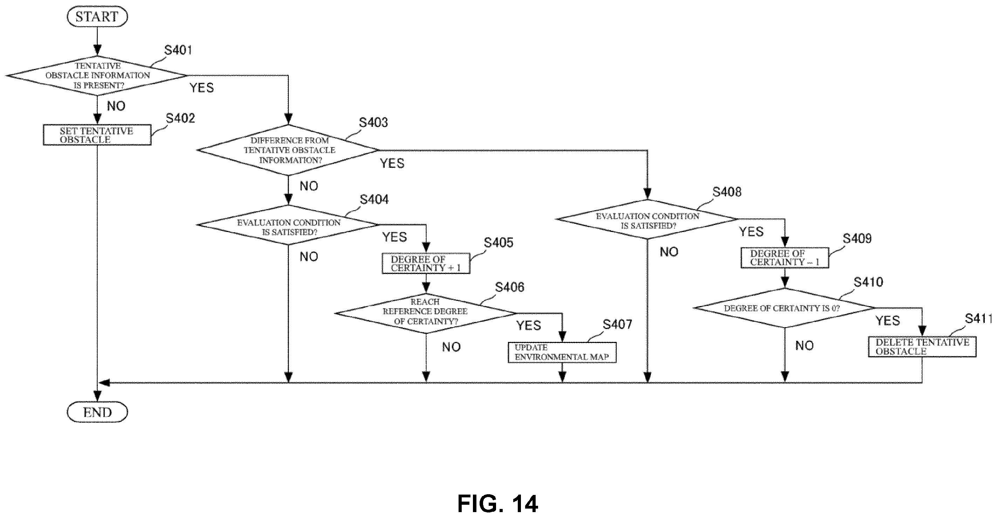

FIG. 14 is a flowchart illustrating processing performed on a tentative obstacle. The flowchart starts when it is determined that an obstacle included in the detection information does not correspond to any of the obstacles noted in the environmental map 141 in step S302 of the processing flow shown in FIG. 12. Note that, if the orientation of the obstacle included in the detection information is, for example, slightly different and assumed to correspond to any of the obstacles described in the environmental map 141, the processing flow in FIG. 12 is continued.

In step S401, the update unit 113 checks whether the obstacle included in the received detection information is already included as the tentative obstacle information in the storage unit 140. If such an obstacle is not included, the processing advances to step S402, and the update unit 113 sets the obstacle as the tentative obstacle, and stores the obstacle as the tentative obstacle information in the storage unit 120. Specifically, the update unit 113 issues a tentative ID of the tentative obstacle, defines the occupied region within a range that is readable from the detected sensing information, gives a degree of certainty of 1 to the obstacle, and generates the tentative obstacle information. For example, if the target object can be identified from the obtained image included in the detection information, the name of the obstacle may also be added to the tentative obstacle information. When the tentative obstacle information is stored in the storage unit 120, the update unit 113 ends the procedure.

If it is determined, in step S401, that the tentative obstacle information is already stored in the storage unit 120, the update unit 113 advances to step S403, compares the result of detection of the detection information with the tentative obstacle information to determine if there is a difference such as a deviation in position or orientation. If there is no difference, the update unit 113 advances to step S404, and if there is a difference, the update unit 113 advances to step S408.

When the processing advances from step S403 to step S404, the update unit 113 determines whether the tentative obstacle to be observed satisfies the evaluation condition for increasing the degree of certainty. If the condition is satisfied, the update unit 113 advances to step S405. If the condition is not satisfied, the update unit 113 ends the procedure without updating the degree of certainty. Here, the evaluation condition for increasing the degree of certainty may be the same as the evaluation condition for increasing the degree of certainty of the obstacle described in the environmental map 141, or the evaluation condition defined for the tentative obstacle.

Advancing to step S405, the update unit 113 increases the degree of certainty of the obstacle by 1. Then, in step S406, the update unit 113 determines whether the increased degree of certainty has reached a standard degree of certainty. A value of 4 or more with which the obstacle is not excluded in the route planning is set as the standard degree of certainty. More preferably, a degree of certainty greater than 4 is set as the standard degree of certainty in order to prevent the environmental map from frequently being rewritten. Here, "5" is set as the standard degree of certainty.

If it is determined that the degree of certainty has not reached the standard degree of certainty, the update unit 113 ends the procedure. If it is determined that the degree of certainty has reached the standard degree of certainty, the update unit 113 advances to step S407, and adds the tentative obstacle to the environmental map 141 as a confirmed obstacle. Specifically, the update unit 113 updates the environmental map 141 by adding the tentative obstacle information of the tentative obstacles that has been collected and updated as one item of data structure of the environmental map 141 that is described above using FIG. 7. Thereafter, the update unit 113 ends the procedure.

Advancing from step S403 to step S408, the update unit 113 determines whether the obstacle to be observed satisfies the evaluation condition for decreasing the degree of certainty. If the obstacle satisfies the condition, the processing advances to step S409. If the obstacle does not satisfy the condition, the update unit 113 ends the procedure without updating the degree of certainty. Here, the evaluation condition for decreasing the degree of certainty may be the same as the evaluation condition for decreasing the degree of certainty of the obstacle described in the environmental map 141, or the evaluation condition defined for the tentative obstacle.

Advancing to step S409, the update unit 113 decreases the degree of certainty of the obstacle by 1. Then, in step S410, the update unit 113 determines whether the decreased degree of certainty has become 0. If it is determined that the degree of certainty has not become 0, the update unit 113 ends the procedure. If it is determined that the degree of certainty has become 0, the update unit 113 advances to step S411, and assuming that the tentative obstacle is no longer present, deletes the tentative obstacle information stored in the storage unit 120, and ends the procedure.

If the environmental map 141 is appropriately updated through the processing as described above, the system server 100 can be stably used as a map used for planning the route of the mobile robot 200 while corresponding to a dynamically changing environment. In other words, the optimum movement route can be planned corresponding to the changing environment, and a situation can be prevented in which the information regarding the obstacle whose continuous presence is uncertain is frequently added to or deleted from the environmental map.

In the present embodiment described above, the degree of certainty is expressed by an integer from 1 to 10. However, the degree of certainty may also be expressed by a small number between 0 and 1. The degree of certainty is not limited to be expressed by numerical values, and may also be expressed by a plurality of groups. The update of the degree of certainty need only be set in a stepwise manner in accordance with the way it is expressed. In addition, although the degree of certainty is increased/decreased by 1 regardless of the type of the target in the present embodiment described above, the increase/decrease value may also be set for each target. Also, although the standard for excluding the target is set to the degree of certainty of 3 or less regardless of the type of the target in the present embodiment described above, the standard for exclusion may also be set for each target.

The format of the environmental map and the route information described above are merely examples, and needless to say, other formats may also be used. If the starting point and the destination point are respectively included in different environmental maps, the maps may be synthesized into one environmental map together with an environmental map that connects those two environmental maps.

Further, the configuration of the mobile robot 200 is not limited to the above configuration. The driving mechanism is not limited to one that adopts two driving wheels, but may also be an omni wheel, a crawler, and the like. Also, a mechanism for performing bipedal walking or quadruped walking may also be adopted. The algorithm and evaluation standard for planning the movement route from the starting point to the destination point may be selected in accordance with the driving mechanism of the mobile robot 200.

Also, in the present embodiment described above, the system server 100 functions as the route planning system. However, elements for functioning as the route planning system may also be arranged between the mobile robot 200 and the system server 100 in a distributed manner. In this case, the route planning system is configured by the mobile robot 200 and the system server 100. Alternatively, the mobile robot 200 may also include all the elements for functioning as the route planning system. In this case, the mobile robot 200 itself functions as the route planning system.

### LIST OF REFERENCE NUMERALS

- 100: System server
- 110: System control unit
- 111: Obtaining unit
- 112: Planning unit
- 113: Update unit
- 120: Display monitor
- 130: Input device
- 140: Storage unit
- 141: Environmental map
- 150: Communication unit
- 200: Mobile robot
- 201: Driving wheel
- 202: Caster
- 210: Movement control unit
- 220: Trolley driving unit
- 230: Sensor unit
- 231: Stereo camera
- 232: Laser scanner
- 240: Storage unit
- 241: Route information
- 250: Communication unit
- 300: Network
- 310: Communication unit
- 410: Table
- 420: Column

## Claims

1. A mobile robot (200) configured to obtain route information (241) from a route planning system (100), the route information (241) being information on a planned movement route, the mobile robot comprising:
a movement control unit (210) configured to move based on the route information (241); and
a detection unit (230) configured to detect any surrounding obstacles while the mobile robot moves under control of the movement control unit (210), wherein the mobile robot (200) is further configured to obtain excluded object information from the route planning system (100), the excluded object information being information regarding any obstacles that have been excluded when planning the movement route due to having a degree of certainty of being present at their location which does not satisfy a predetermined standard,
**characterized in that**
the detection unit (230) is configured to execute detection processing that is finer than regular detection processing, on any obstacle included in the excluded object information.

2. The mobile robot (200) according to claim 1, further comprising:
a transmission unit (250) configured to transmit, to the route planning system (100), a result of detection by the detection unit (230) as detection information.

3. A control program for a mobile robot (200) that is configured to obtain, from a route planning system (100), route information (241), the route information (241) being information on a planned movement route, and excluded object information, the excluded object information being information regarding any obstacles that have been excluded when planning the movement route due to having a degree of certainty of being present at their location which does not satisfy a predetermined standard,
the control program causing the mobile robot (200) to execute:
a moving step for moving the mobile robot according to the route information (241); and
a detection step for detecting any surrounding obstacles while the mobile robot (200) moves in the moving step;
**characterized in that**, in the detection step, detection processing that is finer than regular detection processing is executed on any obstacle that is excluded in the excluded object information.

## Patentansprüche

1. Mobiler Roboter (200), der eingerichtet ist, Routeninformationen (241) von einem Routenplanungssystem (100) zu erhalten, wobei die Routeninformationen (241) Informationen über eine geplante Bewegungsroute sind, wobei der mobile Roboter Folgendes aufweist:
eine Bewegungssteuereinheit (210), die eingerichtet ist, sich auf Basis der Routeninformationen (241) zu bewegen; und
eine Detektionseinheit (230), die eingerichtet ist, jegliche Hindernisse in der Umgebung zu detektieren, während sich der mobile Roboter unter Steuerung der Bewegungssteuereinheit (210) bewegt,
wobei der mobile Roboter (200) ferner eingerichtet ist, Informationen über ausgeschlossene Objekte von dem Routenplanungssystem (100) zu erhalten, wobei die Informationen über ausgeschlossene Objekte Informationen bezüglich jeglicher Hindernisse sind, die beim Planen der Bewegungsroute ausgeschlossen wurden, weil sie einen Grad an Sicherheit haben, an ihrem Ort vorhanden zu sein, der einen vorbestimmten Standard nicht erfüllt,
**dadurch gekennzeichnet, dass** die Detektionseinheit (230) eingerichtet ist, eine Detektionsverarbeitung an jeglichem Hindernis, das in den Informationen über ausgeschlossene Objekte enthalten ist, auszuführen, die feiner als eine reguläre Detektionsverarbeitung ist.

2. Mobiler Roboter (200) nach Anspruch 1, ferner aufweisend:
eine Übertragungseinheit (250), die eingerichtet ist, ein Ergebnis der Detektion durch die Detektionseinheit (230) als Detektionsinformationen an das Routenplanungssystem (100) zu übertragen.

3. Steuerprogramm für einen mobilen Roboter (200), der eingerichtet ist, von einem Routenplanungssystem (100) Routeninformationen (241), wobei die Routeninformationen (241) Informationen über eine geplante Bewegungsroute sind, und Informationen über ausgeschlossene Objekte zu erhalten, wobei die Informationen über ausgeschlossene Objekte Informationen bezüglich jeglicher Hindernisse sind, die beim Planen der Bewegungsroute ausgeschlossen wurden, weil sie einen Grad an Sicherheit haben, an ihrem Ort vorhanden zu sein, der einen vorbestimmten Standard nicht erfüllt,
wobei das Steuerprogramm den mobilen Roboter (200) veranlasst, auszuführen:
einen Bewegungsschritt zum Bewegen des mobilen Roboters gemäß den Routeninformationen (241); und
einen Detektionsschritt zum Detektieren jeglicher Hindernisse in der Umgebung, während sich der mobile Roboter (200) in dem Bewegungsschritt bewegt;
**dadurch gekennzeichnet, dass** in dem Detektionsschritt eine Detektionsverarbeitung an jeglichem Hindernis, das in den Informationen über ausgeschlossene Objekte ausgeschlossen ist, ausgeführt wird, die feiner als eine reguläre Detektionsverarbeitung ist.

## Revendications

1. Robot mobile (200) configuré pour obtenir des informations d'itinéraire (241) à partir d'un système de planification d'itinéraire (100), les informations d'itinéraire (241) étant des informations sur un itinéraire de déplacement planifié, le robot mobile comprenant :
une unité de commande de déplacement (210) configurée pour se déplacer sur la base des informations d'itinéraire (241) ; et
une unité de détection (230) configurée pour détecter tout obstacle environnant pendant que le robot mobile se déplace sous la commande de l'unité de commande de déplacement (210),
dans lequel le robot mobile (200) est en outre configuré pour obtenir des informations d'objet exclu à partir du système de planification d'itinéraire (100), les informations d'objet exclu étant des informations concernant tout obstacle qui a été exclu lors de la planification de l'itinéraire de déplacement en raison d'avoir un degré de certitude d'être présent à leur emplacement qui ne satisfait pas à une norme prédéterminée,
**caractérisé en ce que** l'unité de détection (230) est configurée pour exécuter un traitement de détection qui est plus fin qu'un traitement de détection régulier, sur tout obstacle inclus dans les informations d'objet exclu.

2. Robot mobile (200) selon la revendication 1, comprenant en outre :
une unité de transmission (250) configurée pour transmettre, au système de planification d'itinéraire (100), un résultat de détection par l'unité de détection (230) en tant qu'informations de détection.

3. Programme de commande pour un robot mobile (200) qui est configuré pour obtenir, à partir d'un système de planification d'itinéraire (100), des informations d'itinéraire (241), les informations d'itinéraire (241) étant des informations sur un itinéraire de déplacement planifié, et des informations d'objet exclu, les informations d'objet exclu étant des informations concernant tout obstacle qui a été exclu lors de la planification de l'itinéraire de déplacement en raison d'avoir un degré de certitude d'être présent à leur emplacement qui ne satisfait pas à une norme prédéterminée,
le programme de commande amenant le robot mobile (200) à exécuter :
une étape de déplacement pour déplacer le robot mobile selon les informations d'itinéraire (241) ; et
une étape de détection pour détecter tout obstacle environnant pendant que le robot mobile (200) se déplace à l'étape de déplacement ;
**caractérisé en ce que**, à l'étape de détection, un traitement de détection qui est plus fin qu'un traitement de détection régulier est exécuté sur tout obstacle qui est exclu dans les informations d'objet exclu.
